# EUROPEAN PATENT APPLICATION

(11) **EP 4 722 855 A1**
(43) Date of publication of application: **08.04.2026**
(21) Application number: 25820901.4
(22) Date of filing: 21.03.2025
(51) Int. Cl.: G06F 1/18

(54) **HARD-DISK DRIVE BACKPLANE MODULE AND SERVER**

(30) Priority: 14.06.2024 CN 202410766963
(71) Applicant: Suzhou Metabrain Intelligent Technology Co., Ltd., Suzhou, Jiangsu 215000 (CN)
(72) Inventor: ZHAO, Jianjie, Suzhou, Jiangsu 215000 (CN); JIA, Huijuan, Suzhou, Jiangsu 215000 (CN); LI, Xishuan, Suzhou, Jiangsu 215000 (CN)
(74) Representative: Michalski Hüttermann & Partner Patentanwälte mbB
(86) International application number: PCT/CN2025/084227
(87) International publication number: WO 2025/256219

(57) **Abstract**

The present application relates to the technical field of hard drive backplanes, and discloses a hard-disk drive backplane module and a server, wherein the hard drive backplane module includes a first hard drive backplane; the first hard drive backplane comprising: a first gold finger, a RAID controller IC, a first connector and at least one first hard drive interface; wherein, the first gold finger is configured to connect a first signal connector of a mainboard; part of pins of the first gold finger are connected to the first hard drive interface and configured to transmit a first data signal to the first hard drive interface; the RAID controller IC is connected to another part of the pins of the first gold finger and configured to perform a conversion between a data signal of the first gold finger and second data signals, and perform a conversion between a data signal of the first gold finger and third data signals; the RAID controller IC is configured to transmit the second data signals to the first hard drive interface and to transmit the third data signal to the first connector; the first connector is configured to transmit the third data signals to other hard drive backplanes. The present application could support different types of hard drives, and could support a large number of hard drives, which could meet the storage requirements of the server.

## Description

### CROSS-REFERENCE TO RELATED APPLICATION

The application claims the priority of the Chinese Patent application filed on June 14th, 2024, before the CNIPA, China National Intellectual Property Administration with the application number of 202410766963.6, and the title of "HARD-DISK DRIVE BACKPLANE MODULE AND SERVER", which is incorporated herein in its entirety by reference.

### FIELD

The present application relates to the technical field of hard drive backplanes and, more particularly, to a hard-disk drive backplane module and a server.

### BACKGROUND

As the core equipment for processing and storing data, servers are increasingly required to provide greater storage capacity. The chassis of the server has various sizes such as 1U and 2U, and the hard drive has a certain size. When the hard drives are installed, the number of the hard drives that could be installed is limited by both the size of the server and the number of the interfaces on the mainboard of the server, making it difficult to meet the storage requirements.

### SUMMARY

In view of this, the present application provides a hard drive backplane module and a server; to solve the problem that the hard drive backplane is difficult to meet the storage requirements of the server.

According to a first aspect, the present application provides a hard drive backplane module, including a first hard drive backplane; the first hard drive backplane including: a first gold finger, a redundant array of independent disks (RAID) controller IC, a first connector and at least one first hard drive interface;
the first gold finger is configured to connect a first signal connector of a mainboard;
part of pins of the first gold finger are connected to the first hard drive interface and configured to transmit a first data signal to the first hard drive interface; the first data signal is a data signal supported by a first-type hard drive;
the RAID controller IC is connected to another part of the pins of the first gold finger and configured to perform a conversion between a data signal of the first gold finger and at least one group of second data signals, and perform a conversion between a data signal of the first gold finger and at least one group of third data signals; the second data signal and the third data signal are both data signals supported by a second-type hard drive;
a first data port of the RAID controller IC is connected to the first hard drive interface and configured to transmit the second data signals to the first hard drive interface;
a second data port of the RAID controller IC is connected to the first connector and configured to transmit the third data signal to the first connector; the first connector is configured to transmit the third data signals to other hard drive backplanes.

In some embodiments, the first hard drive backplane further includes: a first logic controller;
the first logic controller is connected to the RAID controller IC through a serial bus and is configured to transmit serial signals; the serial signals include a control signal and a monitoring signal for controlling the RAID controller IC.

In some embodiments, the first hard drive backplane further includes: a supercapacitor interface and a first memory; the first memory is connected to the RAID controller IC;
the supercapacitor interface is configured to be connected to a supercapacitor;
the first logic controller is further configured to control the supercapacitor interface to supply power to the RAID controller IC in a case of abnormal power supply; the RAID controller IC stores data into the first memory.

In some embodiments, the first hard drive backplane further includes: a second logic controller;
the second logic controller is connected to the first hard drive interface and the first connector and configured to acquire hard drive status information of a first hard drive corresponding to the first hard drive interface, and turn on an led of the first hard drive.

In some embodiments, further including a second hard drive backplane; the second hard drive backplane includes: a first cable connector, a second connector and at least one second hard drive interface;
the first cable connector is configured to connect a second signal connector of the mainboard via a cable;
the second connector is configured to connect to the first connector of the first hard drive backplane and transmit the third data signal;
the second connector is connected to the second hard drive interface and configured to transmit the third data signal to the second hard drive interface;
the first cable connector is connected to the second hard drive interface and is configured to transmit a fourth data signal to the second hard drive interface; the fourth data signal is a data signal supported by the first-type hard drive.

In some embodiments, there are multiple second hard drive interfaces, and the second connector is connected to a plurality of second hard drive interfaces;
the second hard drive backplane further includes a first switch chip;
an upstream interface of the first switch chip is connected to a serial signal pin of the second connector, and a plurality of downstream interfaces of the first switch chip are respectively connected to the plurality of the second hard drive interfaces;
the first switch chip is configured to transmit a signal of turning on the led of the hard drive to the plurality of the second hard drive interfaces, and/or, to transmit acquired hard drive status information to the second connector.

In some embodiments, the second hard drive backplane includes: two first cable connectors, two second connectors and two second hard drive interfaces; the two second hard drive interfaces are divided, according to their respective distances to the second connectors, into interface groups, the number of the interface groups matches the number of the second connectors;
one of the first cable connectors is connected to a closest second hard drive interface among all the second hard drive interfaces in the first interface group, and the other one of the first cable connectors is connected to a closest second hard drive interface among all the second hard drive interfaces in the second interface group;
one of the second connectors is connected to a closest second hard drive interface among all the second hard drive interfaces in the first interface group, the other one of the second connectors is connected to a closest second hard drive interface among all the second hard drive interfaces in the second interface group.

In some embodiments, the first cable connector is further configured to supply power to the second hard drive backplane; or,
the first hard drive backplane further includes a first power connector, and the second hard drive backplane further includes a second power connector; the first power connector is connected to a power pin of the first gold finger and configured to connect the second power connector; the second power connector is configured to supply power to the second hard drive backplane.

In some embodiments, the first hard drive backplane further includes: a second gold finger;
the RAID controller IC is further configured to perform conversion between the data signal of the first gold finger and at least one set of fifth data signals; the fifth data signals are data signals supported by the second-type hard drive;
a third data port of the RAID controller IC is connected to the second gold finger and configured to transmit the fifth data signal to the second gold finger;
the second gold finger is configured to connect other hard drive backplanes and transmit the fifth data signal.

In some embodiments, further including a third hard drive backplane; the third hard drive backplane includes: a second cable connector, a third connector and at least one third hard drive interface;
the second cable connector is configured to connect a third signal connector of the mainboard via a cable;
the third connector is configured to connect the second gold finger of the first hard drive backplane and transmit the fifth data signal;
the third connector is connected to the third hard drive interface and configured to transmit the fifth data signal to the third hard drive interface;
the second cable connector is connected to the third hard drive interface and configured to transmit a sixth data signal to the third hard drive interface; the sixth data signal is a data signal supported by the first-type hard drive.

In some embodiments, there are multiple third hard drive interfaces, and the third connector is connected to a plurality of the third hard drive interfaces;
the third hard drive backplane further includes a second switch chip;
an upstream interface of the second switch chip is connected to a serial signal pin of the third connector, and a plurality of downstream interfaces of the second switch chip are respectively connected to the plurality of the third hard drive interfaces;
the second switch chip is configured to transmit the hard drive led signal to the plurality of the third hard drive interfaces, and/or, to transmit acquired hard drive status information to the third connector.

In some embodiments, a power pin of the second gold finger is connected to a power pin of the first gold finger and configured to connect a power pin of the third connector; the power pin of the third connector is configured to supply power to the third hard drive backplane.

In some embodiments, the first hard drive interface is disposed on a long side of the first hard drive backplane, and the second gold finger is disposed on a short side of the first hard drive backplane;
the third hard drive interface is disposed on a long side of the third hard drive backplane, the third connector is disposed on a short side of the third hard drive backplane;
the total number of the first hard drive interface in the first hard drive backplane and the third hard drive interface in the third hard drive backplane does not exceed a maximum number of hard drives that the server is capable to set in a width direction.

In a second aspect, the present application provides a server including a server, including: a mainboard and the hard drive backplane module according to the first aspect;
the hard drive backplane in the hard drive backplane module is horizontally disposed.

In some embodiments, the hard drive backplane module includes the first hard drive backplane, a second hard drive backplane and a third hard drive backplane;
the first gold finger of the first hard drive backplane is connected to the first signal connector of the mainboard, the first connector of the first hard drive backplane is connected to a second connector of the second hard drive backplane, and a second gold finger of the first hard drive backplane is connected to a third connector of a third hard drive backplane;
a first cable connector of the second hard drive backplane is connected to a second signal connector of the mainboard via a cable; a second cable connector of the third hard drive backplane is connected to a third signal connector of the mainboard via a cable;
the first hard drive backplane and the third hard drive backplane are disposed on a same layer as the mainboard; the second hard drive backplane is disposed on another layer.

In some embodiments, the server includes a first mainboard and a second mainboard; the hard drive backplane module includes: two first hard drive backplanes and two second hard drive backplanes, the second hard drive backplane includes: two first cable connectors, two second connectors and two second hard drive interfaces;
a first gold finger of one of the first hard drive backplanes is connected to a first signal connector of the first mainboard, and the first connector is connected to a second connector that is closer to one of the first hard drive backplanes among all the second connectors on two second hard drive backplanes;
a first gold finger of the other one of the first hard drive backplanes is connected to a first signal connector of the second mainboard, and the first connector is connected to a second connector that is closer to the other one of the first hard drive backplanes among all the second connectors on two second hard drive backplanes;
a second signal connector of the first mainboard is connected to one first cable connector of each of the two second hard drive backplanes;
a second signal connector of the second mainboard is connected to the other one first cable connector of each of the two second hard drive backplanes.

In embodiments of the present application, part of the pins of the first gold finger of the first hard drive backplane are directly connected to the first hard drive interface, thereby directly supporting the first-type hard drive; Further, another part of the pins of the first gold finger are connected to the RAID controller IC, and data signal conversion is performed based on the RAID controller IC, so that the first hard drive interface is enabled to support the second-type hard drive. Furthermore, the RAID controller IC converts multiple data signals of the second-type hard drive and transmits them to other hard drive backplanes through the first connector, thereby supporting more hard drives and ensuring storage capacity. The hard drive backplane module could support different types of hard drives and has a wide application range, and the RAID controller IC could provide data signals of the second-type hard drive to other hard drive backplanes, thereby meeting the storage requirements of the server; the first hard drive backplane is directly inserted to the server mainboard via the first gold finger, which is not only convenient to disassemble and assemble, but also could realize modularization, simplify the assembly process, facilitate deep decoupling of modules, and reduce the number of cables of the whole machine.

### BRIEF DESCRIPTION OF THE DRAWINGS

In order to more clearly explain the technical solutions in the embodiments of the present disclosure or related technologies, the drawings that need to be used in the description of the embodiments or related technologies would be briefly introduced below, and it is obvious that the drawings in the following description are some embodiments of the present disclosure, and other drawings could be obtained from these drawings without making creative labor for a person of ordinary skill in the art.
FIG. 1 is a schematic diagram showing the structure of a first hard drive backplane according to an embodiment of the present application.
FIG. 2 is another schematic diagram showing the structure of the first hard drive backplane according to an embodiment of the present application;
FIG. 3 is a top view of a first hard drive backplane according to an embodiment of the present application;
FIG. 4 is a schematic diagram showing the structure of a second hard drive backplane according to an embodiment of the present application.
FIG. 5 is another schematic diagram showing the structure of the second hard drive backplane according to an embodiment of the present application;
FIG. 6 is a top view of a second hard drive backplane according to an embodiment of the present application;
FIG. 7 is a schematic diagram showing the structure of a third hard drive backplane according to an embodiment of the present application;
FIG. 8 is another schematic diagram showing the structure of the third hard drive backplane according to an embodiment of the present application;
FIG. 9 is a top view of a third hard drive backplane according to an embodiment of the present application;
FIG. 10 is a schematic diagram showing the structure of a server according to an embodiment of the present application.
FIG. 11 is another schematic diagram showing the structure of the server according to an embodiment of the present application.
FIG. 12 is a schematic diagram of a hard drive distribution according to an embodiment of the present application.

Reference elements and numerics:
10. a first hard drive backplane; 101. first gold finger; 102. RAID controller IC; 103. first connector; 104. first hard drive interface; 105. first logic controller; 106. supercapacitor interface; 107. first memory; 108. second logic controller; 109. second gold finger; 110. voltage converter; 111. heat sink; 20. second hard drive backplane; 201. first cable connector; 202. second connector; 203. second hard drive interface; 204. first switch chip; 205. second power connector; 30. third hard drive backplane; 301. second cable connector; 302. third connector; 303. third hard drive interface; 304. second switch chip; 40. mainboard; 401. first signal connector; 402. second signal connector; 403. third signal connector; 501. first hard drive; 502. second hard drive; 503.third hard drive.

### DETAILED DESCRIPTION

To make the objectives, technical solutions, and advantages of the embodiments of the present application clearer, the following would clearly and completely describe the technical solutions in the embodiments of the present application with reference to the accompanying drawings in the embodiments of the present application. Obviously, the described embodiments are only a part, but not all, of the embodiments of the present application. All other embodiments obtained by a person skilled in the art based on the embodiments of the present application without creative effort shall fall within the protection scope of the present application.

With the development of cloud computing applications, informatization has gradually covered all fields of society. People's daily work is increasingly communicated on network, and the volume of network data is also growing explosively. As the core equipment for processing and storing data, servers are increasingly required to provide higher performance and more flexible configurations. To meet the complex and diverse application scenarios of different users in various fields, the server configuration also needs to be flexible and changeable.

Hard drives of server usually have various sizes, such as 3.5 inches, 2.5 inches, etc. Different sizes of hard drives have different capacities and performance. For example, the 3.5-inch hard drive has a large capacity and is suitable for large data centers. It could accommodate more disk slices and storage media, so the capacity could be as high as 16TB or higher. The 2.5-inch hard drive is usually used in laptops and small servers, and the capacity is generally 500GB to 4TB. This hard drive is reduced in size and weight, making it easier to carry and install.

The typical physical dimension of a 3.5-inch hard drive is about 14.7 cm (length) × 10.2 cm (width) × 2.6 cm (thickness). For servers that support 3.5-inch hard drives, the server chassis size is above 4U. U is a size unit of the server, the height of the 1U server is 4.445 cm and the width is 48.3 cm. If you choose a 2U chassis, the height of the chassis is 8.89 cm, and the width of the 3.5-inch hard drive is 10.2 cm. There is no way to insert the hard drive vertically, while horizontal insertion is affected by factors such as the width of the chassis, and only 4 hard drives could be inserted at most, which is difficult to meet the storage requirements. Therefore, a 4U chassis is generally selected, with the hard drive backplane designed as a vertical backplane for inserting hard drives vertically. The number of the hard drives could be determined according to the PCIe resources and application requirements on the board.

In current backplane solutions, a 4U chassis is typically used and connected to a vertical backplane, which occupies a large area, and the thickness of the chassis is thicker than that of 2U chassis, and the cost is higher; however, if a 2U server is used, the number of hard drives that could be inserted is limited, and it is difficult to meet the storage requirements.

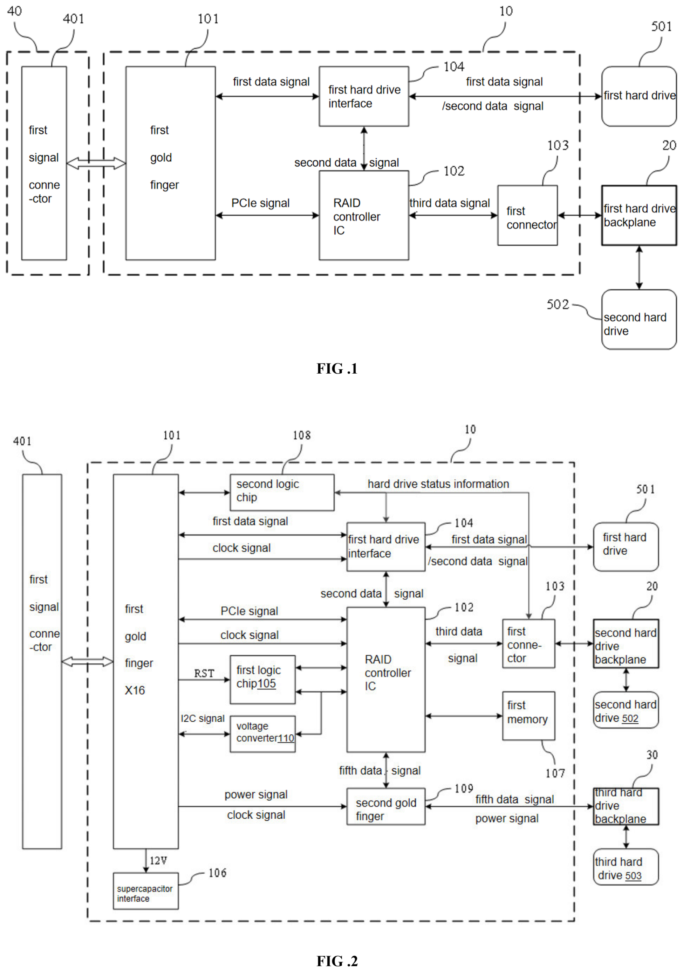

In some embodiments, a hard drive backplane module is provided, which could be applied to a server and could support a plurality of hard drives to be inserted into the server, so as to meet storage requirements. the hard drive backplane module at least includes a first hard drive backplane, the first hard drive backplane utilizes a RAID (Redundant Array of Independent Disks) controller IC to improve the capabilities of the hard drive backplane and could accommodate different types of hard drives. FIG. 1 is a schematic structural diagram of a first hard drive backplane according to an embodiment of the present application. As shown in FIG. 1, the first hard drive backplane 10 includes a first gold finger 101, a RAID controller IC 102, a first connector 103, and at least one first hard drive interface 104.
the first gold finger 101 is configured to connect a first signal connector 401 of a mainboard 40; part of pins of the first gold finger 101 are connected to the first hard drive interface 104 and configured to transmit a first data signal to the first hard drive interface 104; the first data signal is a data signal supported by a first-type hard drive.

The RAID controller IC 102 is connected to another part of the pins of the first gold finger 101, and is configured to perform a conversion between a data signal of the first gold finger 101(such as a PCIe signal) and at least one group of second data signals, and perform a conversion between a data signal of the first gold finger 101 and at least one group of third data signals; the second data signal and the third data signal are both data signals supported by a second-type hard drive.

A first data port of the RAID controller IC 102 is connected to the first hard drive interface 104, and the first data port of the RAID controller IC 102 is configured to transmit the second data signals to the first hard drive interface 104; a second data port of the RAID controller IC 102 is connected to the first connector 103, and the second data port of the RAID controller IC 102 is configured to transmit the third data signal to the first connector 103; the first connector 103 is configured to transmit the third data signals to other hard drive backplanes.

In some embodiments, the mainboard 40 is generally provided with one or more signal connectors, such as an MCIO (Mini Cool Edge I/O) connector, a 4C+ connector (an X16 connector, such as SFF-TA-1002), etc. The first hard drive backplane 10 could be directly inserted into a signal connector located at an edge of the mainboard 40 via a first gold finger 101, that is, a first signal connector 401, so as to realize communication with the mainboard 40.

At present, the storage media of servers could be divided into two categories according to different signals. One is SAS/SATA hard drive based on SAS/SATA (Serial Attached SCSI/Serial Advanced Technology Attachment) signals, and the other is NVMe (Non-Volatile Memory Express) hard drive based on PCIe (Peripheral Component Interconnect express) signals. To enable the hard drive backplane module to accommodate different types of hard drives, the pins of the first gold finger 101 are divided and connected to the RAID controller IC 102 and the first hard drive interface 104 respectively. Part of the pins of the first gold finger 101 are connected to the first hard drive interface 104, so that the first hard drive interface 104 could directly acquire the data signal transmitted by the server, that is, the first data signal; If the data signal directly transmitted by the server is a PCIe signal, the first data signal is also a PCIe signal, and accordingly, the first-type hard drive is a hard drive that supports the PCIe signal, such as an NVMe hard drive.

Another part of the pins of the first gold finger 101 are connected to the RAID controller IC 102, and the RAID controller IC 102 could realize the tri-mode function, that is, it could support SATA hard drive, SAS hard drive and PCIe hard drive. In some embodiments, the RAID controller IC 102 could realize the conversion of different types of data signals, such as converting PCIe signals into SAS/SATA signals, so that the converted data signals could be applied to a second-type hard drive. Furthermore, the RAID controller IC 102 is further configured to convert and generate multiple sets of data signals suitable for the second-type hard drive, and provide data signals to the hard drive via the first hard drive interface 104 and the first connector 103 respectively, and the data signals provided to the first hard drive interface 104 are referred to as second data signals, and the data signals provided to the first connector 103 are referred to as third data signals for convenience of distinguishing description.

For example, the first gold finger 101 is an X16 interface, such as an X16 lane PCIe GEN5 interface, and part of the X8 pins may be connected to the first hard drive interface 104, thereby providing a first data signal to the first hard drive interface 104, such as a PCIe signal; another part of the X8 pins are connected to the RAID controller IC 102, so that the RAID controller IC 102 could perform a signal conversion on the data signal (generally PCIe signal) corresponding to the part of the pins, thereby generating another kind of data signal, that is, the second data signal and the third data signal. For example, the RAID controller IC 102 may realize conversion between the PCIe signal and the SAS/SATA signal, thereby generating the second data signal and the third data signal of the SAS/SATA, or converting the second data signal and the third data signal of the SAS/SATA to the PCIe signal.

In some embodiments, the first connector 103 could be connected to other hard drive backplanes, thereby the third data signal could be transmitted to other hard drive backplanes. By utilizing other hard drive backplanes, so that the server using the hard drive backplane module could be inserted more hard drives.

As shown in FIG. 1, the first hard drive interface 104 could be inserted into the first hard drive 501, and the second hard drive backplane 20 connected to the first connector 103 (the second hard drive backplane 20 would be described in detail later) could be inserted into the second hard drive 502; Further, there are multiple first hard drives 501 and second hard drives 502, so that the storage space of the plurality of hard drives could be provided to the server mainboard 40.

It should be noted that if the first hard drive 501 is the first-type hard drive, the RAID controller IC 102 does not need to convert the data signal at this time, that is, the RAID controller IC 102 does not need to provide the second data signal. When the first hard drive 501 is a second-type hard drive, the first gold finger 101 does not provide the first data signal to the first hard drive interface 104, but the RAID controller IC 102 provides the converted second data signal to the first hard drive interface 104. Similarly, when the second hard drive 502 is the second-type hard drive, the RAID controller IC 102 needs to generate the third data signal.

In the hard drive backplane module provided in this embodiment, part of the pins in the first gold finger 101 of the first hard drive backplane 10 are directly connected to the first hard drive interface 104, thereby directly supporting the first-type hard drive; Further, another part of the pins of the first gold finger 101 are connected to the RAID controller IC 102, and data signal conversion is performed based on the RAID controller IC 102, so that the first hard drive interface 104 is enabled to support the second-type hard drive. Furthermore, the RAID controller IC 102 converts multiple data signals of the second-type hard drive and transmits them to other hard drive backplanes through the first connector 103, thereby supporting more hard drives and ensuring storage capacity. The hard drive backplane module could support different types of hard drives and has a wide application range, and the RAID controller IC 102 could provide data signals of the second-type hard drive to other hard drive backplanes, thereby meeting the storage requirements of the server; the first hard drive backplane 10 is directly inserted to the server mainboard via the first gold finger 101, which is not only convenient to disassemble and assemble, but also could realize modularization, simplify the assembly process, facilitate deep decoupling of modules, and reduce the number of cables of the whole machine.

In some embodiments, referring to FIG. 2, the first hard drive backplane 10 further includes a first logic controller 105. The first logic controller 105 is connected to the RAID controller IC 102 through a serial bus and is configured to transmit serial signals; the serial signals include a control signal and a monitoring signal for controlling the RAID controller IC 102.

In some embodiments, data signals (e.g., PCIe signals) may be transmitted between the mainboard 40 and the first gold finger 101 of the first hard drive backplane 10, and other signals required for the operation of the hard drive backplane may also be transmitted, such as clock signals, power supply signals, and serial signals. Generally, the serial signal is an I2C (Inter-Integrated Circuit) signal. the first hard drive backplane 10 is provided with a logic controller dedicated serving the RAID controller IC 102, namely a first logic controller 105. The first logic controller 105 may be, for example, a CPLD ( Complex Programmable Logic Device), a FPGA (Field-Programmable Gate Array ), or the like.

In some embodiments, the first logic controller 105 is connected to the RAID controller IC 102 via a serial bus, thereby enabling transmission of corresponding serial signals. FIG. 2 shows that the serial signal is an I2C signal as an example. Further, to enable the serial signal from the mainboard 40 to be compatible with the RAID controller IC 102, the serial signal may be voltage converted by the voltage converter 110; for example, the voltage converter 110 may be a Repeater. The serial signal includes a control signal and a monitoring signal for controlling the RAID controller IC 102 to realize startup and status monitoring of the RAID controller IC 102, for example, the serial signal includes an SPD (serial presence detect) signal, a power supply timing control signal of the RAID controller IC 102, and the like.

Furthermore, the first logic controller 105 and the RAID controller IC 102 may be directly connected to acquire data in the RAID controller IC 102, such as register data. The first logic controller 105 may also obtain a reset signal (RST) from the first gold finger 101 to reset the RAID controller IC 102.

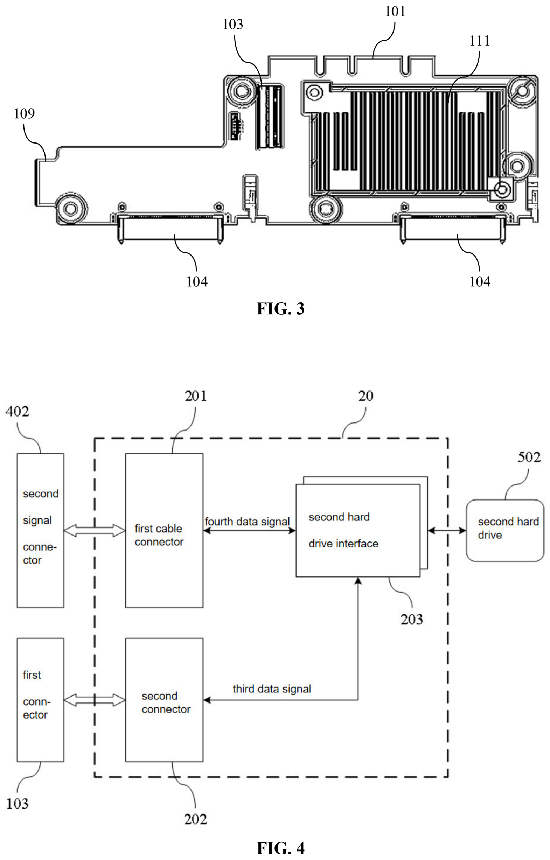

In addition, in order to prevent the operating temperature of the RAID controller IC 102 in the first hard drive backplane 10 from being too high, a heat sink may be provided to dissipate heat from the RAID controller IC 102. FIG. 3 shows a top view of a first hard drive backplane 10; In FIG. 3, above the RAID controller IC 102 is a first gold finger 101, which is provided with two first hard drive interfaces 104, that is, two hard drives could be accommodated. For example, the first hard drive interface 104 could be an SFF-8639 hard drive interface, which could support a 3.5-inch SAS/SATA hard drive or an NVMe hard drive, or could be compatible with a 2.5-inch SAS/SATA/NVMe hard drive. In addition, the heat sink 111 is provided at the middle of the first hard drive backplane 10, and components with relatively high heat dissipation, such as the RAID controller IC 102 and the first logic controller 105, are disposed under the heat sink 111.

A temperature sensor may be provided for the first hard drive backplane 10 to detect the temperature of the first hard drive backplane 10 and avoid excessive temperature. The temperature signal acquired by the temperature sensor may also be fed to the first gold finger 101 via the serial bus, thereby providing the temperature data of the first hard drive backplane 10 to the mainboard 40.

In some embodiments, as shown in FIG. 2, the first hard drive backplane 10 further includes: a supercapacitor interface 106 and a first memory 107; the first memory 107 is connected to the RAID controller IC 102; the supercapacitor interface 106 is configured to be connected to a supercapacitor; the first logic controller 105 is further configured to control the supercapacitor interface 106 to supply power to the RAID controller IC 102 in a case of abnormal power supply; the RAID controller IC 102 stores data into the first memory 107.

In some embodiments, a supercapacitor may be connected to the first hard drive backplane 10 to supply power in a case of abnormal power supply. the supercapacitor interface 106 may be provided with a charging circuit, a voltage conversion circuit, and the like, the first logic controller 105 may control the charging circuit to operate, thereby charging the supercapacitor during normal power supply. When the mainboard 40 is powered abnormally (for example, power failure), the first logic controller 105 controls the voltage conversion circuit to operate, so that the supercapacitor could provide the voltage required for the operation of the RAID controller IC 102, so that the RAID controller IC 102 could continue operating for a period when the power failure occurs, thereby storing data in the first memory 107 and preventing data loss due to power failure or the like. For example, the first memory 107 may be a DDR chip.

In some embodiments, as shown in FIG. 2, the first hard drive backplane 10 further includes: a second logic controller 108; the second logic controller 108 is connected to the first hard drive interface 104 and the first connector 103, and is configured to acquire hard drive status information of a first hard drive corresponding to the first hard drive interface 104, and turn on an led of the first hard drive.

In some embodiments, the second logic controller 108 is connected to the first hard drive interface 104 to acquire the hard drive status information of the first hard drive 501 and turn on an led of the first hard drive 501. Similarly, the second logic controller 108 is connected to the first connector 103 to acquire the hard drive status information of the second hard drive 502 and turn on an led of the first hard drive 501.

In some embodiments, the hard drive backplane module further includes a second hard drive backplane 20, and the first connector 103 of the first hard drive backplane 10 is used to accommodate the second hard drive backplane 20 and is connected to the second connector 202 of the second hard drive backplane 20. In some embodiments, as shown in FIG. 4, the second hard drive backplane 20 includes a first cable connector 201, a second connector 202, and at least one second hard drive interface 203.
the first cable connector 201 is configured to connect a second signal connector 402 of the mainboard 40 via a cable; the second connector 202 is configured to connect to the first connector 103 of the first hard drive backplane 10 and transmit the third data signal; the second connector 202 is connected to the second hard drive interface 203, and is configured to transmit the third data signal to the second hard drive interface 203; the first cable connector 201 is connected to the second hard drive interface 203, and is configured to transmit a fourth data signal to the second hard drive interface 203; the fourth data signal is a data signal supported by the first-type hard drive.

In some embodiments, the second hard drive backplane 20 is provided with two types of connectors, one for connecting to the second signal connector 402 of the mainboard 40, namely the first cable connector 201, and the other one for connecting to the first connector 103 of the first hard drive backplane 10, namely the second connector 202. To facilitate the installation of the second hard drive backplane 20 at a suitable position of the server, the first cable connector 201 of the second hard drive backplane 20 is connected to the second signal connector 402 of the mainboard 40 via a cable, such as a PCIe cable, an MCIO cable, or the like.

Inside the second hard drive backplane 20, the first cable connector 201 could be directly connected to the second hard drive interface 203, thereby providing a data signal from the mainboard 40 to the second hard drive interface 203, the data signal is similar to the first data signal and is also a data signal supported by the first-type hard drive. The data signal provided by the first cable connector 201 to the second hard drive interface 203 is referred to as a fourth data signal, the second hard drive interface 203 could accommodate the first-type hard drive; for example, the second hard drive 502 connected thereto may be an NVMe hard drive. Furthermore, the second connector 202 could acquire another type of data signal provided by the first hard drive backplane 10, namely the third data signal, enabling the second hard drive interface 203 to accommodate the second-type hard drive; for example, the second hard drive 502 connected thereto may be a SAS/SATA hard drive.

In some embodiments, the modular first hard drive backplane 10 and the second hard drive backplane 20 may be used in combination to ensure the storage capacity of the server; the second hard drive backplane 20 is connected to the mainboard 40 by a cable, thereby the position of the second hard drive backplane 20 could be flexibly set, and the space of the server could be sufficiently utilized. Further, the first hard drive backplane 10 may provide a third data signal suitable for the second-type device to the second hard drive backplane 20, so that the second hard drive backplane 20 could also support different types of hard drives.

In some embodiments, the mainboard 40 of the server could generally provide a second signal connector 402 with multiple channels, for example, the second signal connector 402 is a 4C + connector, etc. In order to make full use of the second signal connector 402 of the mainboard 40, the second hard drive backplane 20 may be provided with at least two first cable connectors 201, and different first cable connectors 201 are connected to different second hard drive interfaces 203; Further, by providing the plurality of first cable connectors 201, so that the connection way between the first cable connector 201 and the second signal connector 402 is more diversified.

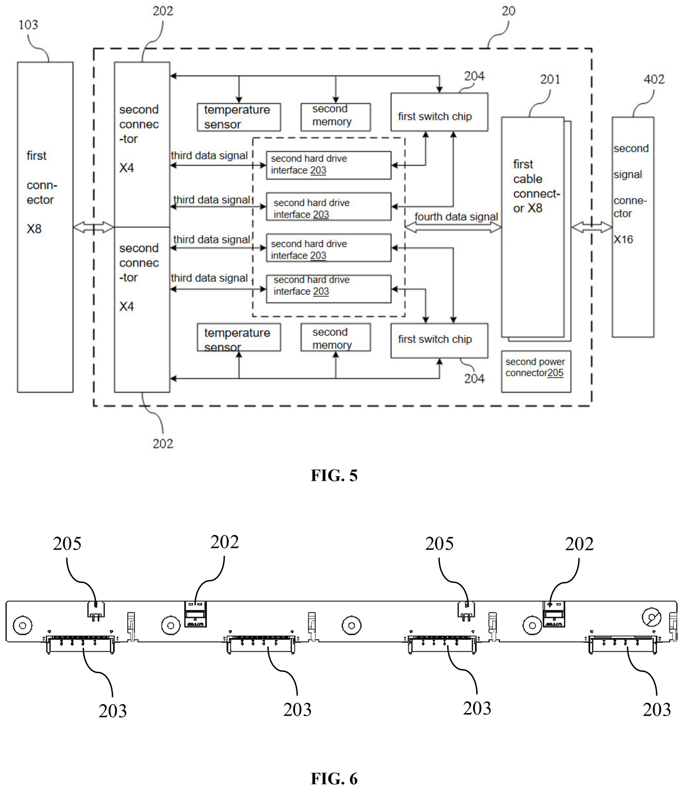

In some embodiments, FIG. 5 shows a schematic diagram of the structure of the second hard drive backplane 20. As shown in FIG. 5, the second hard drive backplane 20 includes at least two first cable connectors 201, two second connectors 202, and two second hard drive interfaces 203, and FIG. 5 shows four second hard drive interfaces 203 as an example.

The second hard drive backplane 20 is bar-shaped, and the first cable connector 201, the second connector 202, and the second hard drive interface 203 could be uniformly provided; Accordingly, all second hard drive interfaces 203 are divided, according to their respective distances to the second connectors 202, into interface groups, the number of the interface groups matches the number of the second connectors 202.
one of the first cable connectors 201 is connected to a closest second hard drive interface 203 among all the second hard drive interfaces 203 in the first interface group, and the other one of the first cable connectors 201 is connected to a closest second hard drive interface 203 among all the second hard drive interfaces 203 in the second interface group; one of the second connectors 202 is connected to a closest second hard drive interface 203 among all the second hard drive interfaces 203 in the first interface group, the other one of the second connectors 202 is connected to a closest second hard drive interface 203 among all the second hard drive interfaces 203 in the second interface group.

As shown in FIG. 5, the second signal connector 402 of the mainboard 40 may be an X16 connector, such as a 4C + connector; If the second hard drive backplane 20 is provided with two first cable connectors 201, each of the first cable connectors 201 may be an X8 connector. The two first cable connectors 201 are respectively connected to corresponding second hard drive interfaces 203. For example, the second signal connector 402 is a 4C + connector, the first cable connector 201 may be an X8 connector, and each first cable connector 201 may transmit two sets of X4 PCIe signals and two sets of clock signals, thereby directly providing PCIe signals (i.e., fourth data signals) to each second hard drive interface 203.

Further, the second hard drive backplane 20 is respectively connected to the corresponding second hard drive interface 203 via a plurality of second connectors 202. As shown in FIG. 5, the second hard drive backplane 20 is provided with two X4 second connectors 202, thereby providing a third data signal to the connected second hard drive interface 203; Accordingly, the first connector 103 may be an X8 connector or two X4 connectors, and is not limited here. For example, the second connector 202 is an X4 Slim SAS (low profile SAS) connector and the first connector 103 is an X8 Slim SAS connector, and the two are connected via a cable; Both the Slim SAS connector and the MCIO connector are connector interfaces designed for PCIe and are board-to-wire connector interfaces.

FIG. 6 shows a top view of the second hard drive backplane 20. As shown in FIG. 6, the second hard drive backplane 20 is bar-shaped, and is provided with two second connectors 202 and four second hard drive interfaces 203, the second hard drive backplane 20 is provided with two first cable connectors 201, which are not shown in FIG. 6, and the two first cable connectors 201 may be provided next to the second connectors 202, respectively. The second hard drive backplane 20 shown in FIG. 6 could be divided into left and right parts, and each part corresponds to a first cable connector 201, a second connector 202, and two second hard drive interfaces 203. Therefore, the two second hard drive interfaces 203 on the left side could serve as one interface group (for example, a first interface group), and the two second hard drive interfaces 203 on the right side could serve as another interface group (for example, a second interface group).

The first cable connector 201 on the left side could be connected to the two second hard drive interfaces 203 on the left side to provide a fourth data signal to the two second hard drive interfaces 203; furthermore, for the second connector 202 on the left, it is also connected to the two second hard drive interfaces 203 on the left, and provides the third data signal to the two second hard drive interfaces 203.

Similarly, for the first cable connector 201 on the right side, it could be connected to the two second hard drive interfaces 203 on the right side to provide the fourth data signal to the two second hard drive interfaces 203; furthermore, the second connector 202 on the right is also connected to the two second hard drive interfaces 203 on the right, and the third data signal is supplied to the two second hard drive interfaces 203.

In some embodiments, by utilizing multiple first cable connectors 201 and multiple second connectors 202, not only the interface resources provided by the motherboard 40 could be fully utilized, but flexible connections with the motherboard 40 and the first hard drive backplane 10 could also be achieved. For example, two first cable connectors 201 of the second hard drive backplane 20 may be connected to second signal connectors 402 of different mainboards 40, or two second connectors 202 of a second hard drive backplane 20 may be connected to different first hard drive backplanes 10 respectively (which requires providing multiple first hard drive backplanes 10), which would be described in detail later.

In some embodiments, there are multiple second hard drive interfaces 203, and the second connector 202 is connected to the plurality of second hard drive interfaces 203; as shown in FIG. 5, the second connector 202 is connected to two second hard drive interfaces 203. To be able to transmit the serial signals of each second hard drive 502, the second hard drive backplane 20 further includes a first switch chip 204; as shown in FIG. 5, a first switch chip 204 needs to be provided for each second connector 202.

As shown in FIG. 5, an upstream interface of the first switch chip 204 is connected to a serial signal pin of the second connector 202, and a plurality of downstream interfaces of the first switch chip 204 are respectively connected to the plurality of the second hard drive interfaces 203; the first switch chip 204 is configured to transmit a signal of turning on the led of the hard drive to the plurality of the second hard drive interfaces (203), and/or, to transmit acquired hard drive status information to the second connector 202.

In some embodiments, a serial signal is also transmitted between the second connector 202 and the first connector 103 in addition to transmitting the third data signal, such as an I2C signal; in the case where it is necessary to transmit the serial signals from the plurality of second hard drives 502, a switch chip for transmitting the serial signals is provided, namely the first switch chip 204, so that a plurality of sets of serial signals could be divided and fed to the corresponding second hard drive interface 203.

Further, as shown in FIG. 5, the second hard drive backplane 20 further includes a temperature sensor and a second memory; the temperature sensor and the second memory share the same serial bus with the upstream interface of the first switch chip 204, that is, the temperature sensor and the second memory are also connected to the serial signal pin in the second connector 202. The serial signal pin in the second connector 202 could be fully utilized by time-division multiplexing the serial bus to transmit temperature signals, memory data, hard drive led signals, hard drive status information, etc.

In some embodiments, the temperature sensor is disposed on the second hard drive backplane 20, and is configured for acquiring the temperature signal of the second hard drive backplane 20, and transmitting the temperature signal to the second connector 202 via the serial bus, and then transmitting the temperature signal to the first hard drive backplane 10, and transmitting the temperature signal from the first hard drive backplane 10 to the mainboard 40. For example, the temperature signal may be sent to a second logic controller 108 of the first hard drive backplane 10, which transmits the temperature signal to a BMC (Substrate Management Controller) of the mainboard 40. When multiple temperature sensors are present, they are evenly distributed. For example, two temperature sensors are respectively disposed on left and right sides of the second hard drive backplane 20 for monitoring temperatures on the left and right sides.

The second memory is configured to read the configuration information of the corresponding hard drive and transmit it to the second connector 202, which could then be transmitted to the mainboard based on the second logic controller 108 of the first hard drive backplane 10. For example, the second memory may be an EEPROM (Electrically Erasable Programmable Read Only Memory).

Here, as shown in FIG. 5, the number of temperature sensors and second memories may be consistent with the number of second connectors 202, that is, each second connector 202 corresponds to one temperature sensor and one second memory, so as to accommodate the situation of a plurality of second connectors 202.

In some embodiments, for the second hard drive backplane 20, power could be supplied to it via the first cable connector 201. For example, the second signal connector 402 is a 4C + connector, and 12V power from the mainboard 40 could be transmitted via the 4C + connector, so that power could be supplied based on the first cable connector 201.

Alternatively, power may be supplied to the second hard drive backplane 20 by the first hard drive backplane 10. In some embodiments, the first hard drive backplane 10 further includes a first power connector, and the second hard drive backplane 20 further includes a second power connector 205; as shown in FIG. 6, two second power connectors 205 may be provided to supply power to the left and right parts, respectively. The first power connector is connected to the power pin of the first gold finger 101, and the first power connector is configured to be connected to the second power connector 205; the second power connector 205 is configured to supply power to the second hard drive backplane 20.

In some embodiments, the first gold finger 101 may draw power from the mainboard 40 through the first signal connector 401 (for example, a 4C + connector), and may adopt a power supply scheme such as P12V and P5V. The power pin of the first gold finger 101 may be connected to a first power connector, and the first power connector may be a gold finger structure. By means of the first power connector being connected to the second power connector 205 of the second hard drive backplane 20, power supply to the second hard drive backplane 20 is achieved.

In some embodiments, as shown in FIGS. 2 and 3, the first hard drive backplane 10 further includes a second gold finger 109.

The RAID controller IC 102 is further configured to perform conversion between the data signal of the first gold finger 101 and at least one set of fifth data signals; the fifth data signals are data signals supported by the second-type hard drive; a third data port of the RAID controller IC 102 is connected to the second gold finger 109, and is configured to transmit the fifth data signal to the second gold finger 109; the second gold finger 109 is configured to connect other hard drive backplanes and transmit the fifth data signal.

In some embodiments, the RAID controller IC 102 may convert the data signals of the mainboard 40 into a plurality of sets of other types of data signals, part of the data signals are the above-described second data signals and third data signals, and another part of the data signals are provided to the second gold finger 109, that is, the fifth data signal. The second gold finger 109 may be connected to other hard drive backplanes and transmit fifth data signals. As shown in FIG. 2, the second gold finger 109 is connected to the third hard drive backplane 30, so that a fifth data signal could be provided to the third hard drive 503 connected to the third hard drive backplane 30, so that the third hard drive backplane 30 could also be inserted to the second-type hard drive.

If the first hard drive backplane 10 further includes a second logic controller 108, the second logic controller 108 may also be connected to the second gold finger 109 to acquire hard drive status information of the corresponding hard drive (third hard drive 503), and turn on an led of the third hard drive 503. To simplify the wiring connections, the connection relationship between the second logic controller 108 and the second gold finger 109 is not shown in FIG. 2.

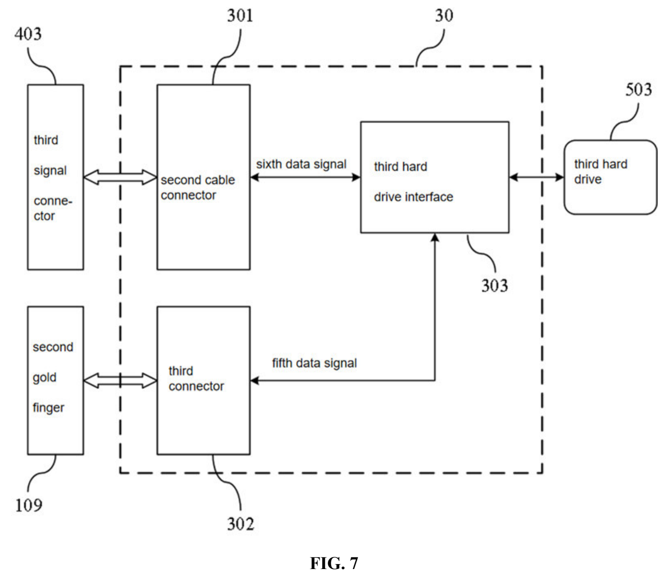

In some embodiments, the hard drive backplane module further includes a third hard drive backplane 30, and the third hard drive backplane 30 has substantially the same architecture as the second hard drive backplane 20. As shown in FIG. 7, the third hard drive backplane 30 includes a second cable connector 301, a third connector 302, and at least one third hard drive interface 303.

The second cable connector 301 is configured to connect a third signal connector 403 of the mainboard 40 via a cable; the third connector 302 is configured to connect the second gold finger 109 of the first hard drive backplane 10 and transmit the fifth data signal; the third connector 302 is connected to the third hard drive interface 303, and is configured to transmit the fifth data signal to the third hard drive interface 303; the second cable connector 301 is connected to the third hard drive interface 303, and is configured to transmit a sixth data signal to the third hard drive interface 303; the sixth data signal is a data signal supported by the first-type hard drive.

In some embodiments, similar to the second hard drive backplane 20 described above, the third hard drive backplane 30 is also provided with two types of connectors, one for connecting to the third signal connector 403 of the mainboard 40, namely the second cable connector 301, and the other one for connecting to the first hard drive backplane 10, namely the third connector 302, the difference is that the third connector 302 is connected to the second gold finger 109 of the first hard drive backplane 10.

In the third hard drive backplane 30, the second cable connector 301 could be directly connected to the third hard drive interface 303, so that the data signal from the mainboard 40 could be provided to the third hard drive interface 303, which is similar to the first data signal and is also a data signal supported by the first-type hard drive. For ease of distinction, the data signal provided by the second cable connector 301 to the third hard drive interface 303 is referred to as a sixth data signal. The third hard drive interface 303 could accommodate a first-type hard drive; for example, the third hard drive 505 connected thereto may be an NVMe hard drive. Further, the third connector 302 may acquire another type of data signal, i.e., a fifth data signal, provided by the first hard drive backplane 10 via the second gold finger 109, so that the third hard drive interface 303 could also accommodate the second-type hard drive, for example, the third hard drive 505 connected thereto is a SAS/SATA hard drive.

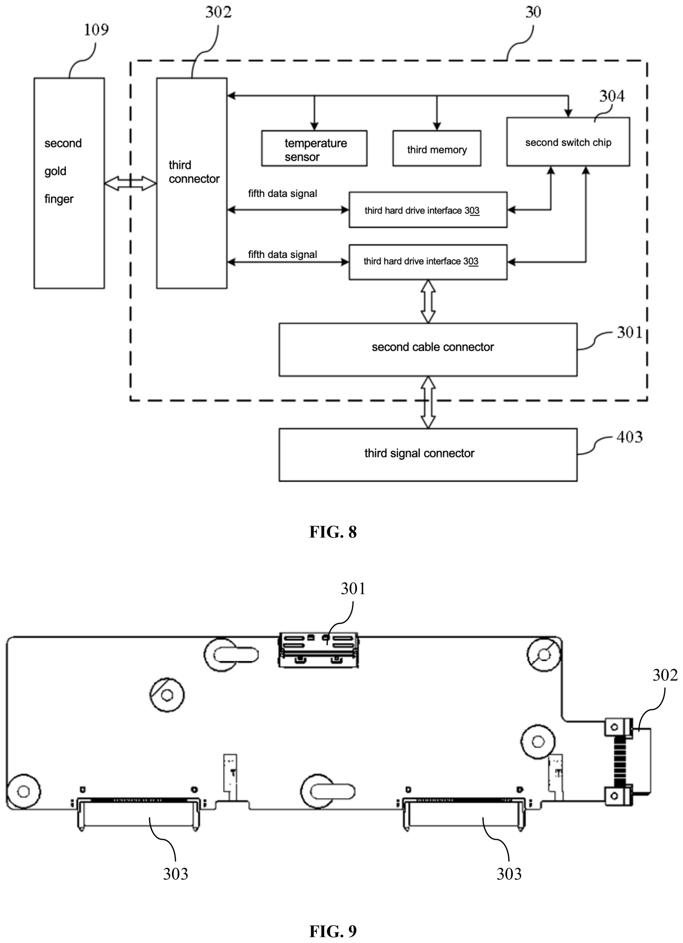

Further, similar to the second hard drive backplane 20 described above, there are multiple third hard drive interfaces 303, and the third connector 302 may be connected to the plurality of third hard drive interfaces 303. Accordingly, as shown in FIG. 8, the third hard drive backplane 30 further includes a second switch chip 304.

The upstream interface of the second switch chip 304 is connected to a serial signal pin of the third connector 302, and a plurality of downstream interfaces of the second switch chip 304 are respectively connected to the plurality of the third hard drive interfaces 303; the second switch chip 304 is configured to transmit the hard drive led signal to the plurality of the third hard drive interfaces 303, and/or, to transmit acquired hard drive status information to the third connector 302.

In addition, the third hard drive backplane 30 may also be provided with a temperature sensor and a corresponding memory, that is, a third memory; the working principle of the second switch chip 304, the temperature sensor, and the third memory of the third hard drive backplane 30 is the same as that of the first switch chip 204, the temperature sensor, and the second memory of the second hard drive backplane 20, and would not be repeatedly described here.

In some embodiments, the third hard drive backplane 30 mainly realizes horizontal expansion to the first hard drive backplane 10. To fully utilize the interface of the mainboard 40, the third signal connector 403 connected to the third hard drive backplane 30 may be an interface with no power supply or unstable power supply, such as an MCIO connector. To realize stable power supply to the third hard drive backplane 30, the second gold finger 109 is also provided with corresponding power pins.

In some embodiments, the power pin of the second gold finger 109 is connected to the power pin of the first gold finger 101, and the power pin of the second gold finger 109 is configured to be connected to the power pin of the third connector 302; the power pins of the third connector 302 are configured to supply power to the third hard drive backplane 30.

In some embodiments, the third connector 302 of the third hard drive backplane 30 could draw power from the second gold finger 109, and the power of the second gold finger 109 is also from the first gold finger 101 connected to the first signal connector 401, that is, the third hard drive backplane 30 is also essentially powered by the first signal connector 401.

As shown in FIG. 2, the clock signal acquired by the first gold finger 101 may be provided to the RAID controller IC 102 and the first hard drive interface 104, respectively, and may also be provided to the second gold finger 109 to provide a clock to the third hard drive backplane 30. Alternatively, the third hard drive backplane 30 may acquire a clock signal from the mainboard 40 side via the second cable connector 301, this is not limited herein.

In some embodiments, as shown in FIG. 3, the first hard drive interface 104 is disposed on the long side of the first hard drive backplane 10, and the second gold finger 109 is disposed on the short side of the first hard drive backplane 10. Further, as shown in FIG. 9, the third hard drive interface 303 is provided on the long side of the third hard drive backplane 30, and the third connector 302 is provided on the short side of the third hard drive backplane 30.

In some embodiments, when the first hard drive backplane 10 and the third hard drive backplane 30 are mounted to the server, the third connector 302 and the second gold finger 109 could be mated directly. This forms a bar-shaped hard drive backplane (including the first hard drive backplane 10 and the third hard drive backplane 30), and the overall structure thereof could be similar to the second hard drive backplane 20 shown in FIG. 6, enabling the horizontal installation of more hard drives.

Further, the total number of the first hard drive interface 104 in the first hard drive backplane 10 and the third hard drive interface 303 in the third hard drive backplane 30 does not exceed a maximum number of hard drives that the server is capable to set in a width direction. Further, the number of second hard drive interfaces 203 in the second hard drive backplane 20 does not exceed the maximum number of hard drives that the server is capable to set in the width direction.

For example, the width of a 2U server is 48.3 cm, while the width of a 3.5-inch hard drive is 10.2 cm. Therefore, when the hard drive is placed horizontally, the 2U server could set up to four 3.5-inch hard drives, that is, the maximum number of hard drives that the server is capable to set in the width direction is 4. Accordingly, the number of second hard drive interfaces 203 in the second hard drive backplane 20 is at most 4, that is, at most four second hard drives 502 could be connected; Furthermore, the sum of the number of the first hard drive interface 104 and the third hard drive interface 303 is at most 4, that is, the sum of the number of the first hard drive 501 and the third hard drive 503 is at most 4, for example, the first hard drive backplane 10 is provided with two first hard drive interfaces 104, and the third hard drive backplane 30 is also provided with two third hard drive interfaces 303.

In some embodiments, the hard drive backplane module includes a modular first hard drive backplane 10, a second hard drive backplane 20, and a third hard drive backplane 30, which could be used in combination with part or all the hard drive backplanes to realize deep decoupling of the server. While ensuring the storage capacity of the server, the hard drive backplane could be set based on the actual structure of the server, which could not only save unit space and structural cost, but also make full use of mainboard resources.

Based on the same inventive concept, an embodiment of the present application further provides a server including: a mainboard 40 and a hard drive backplane module as described above; the hard drive backplane of the hard drive backplane module is horizontally arranged. For example, the first hard drive backplane 10, the second hard drive backplane 20, and the third hard drive backplane 30 are horizontally disposed.

Different hard drive backplanes could be disposed in different layers. For example, the first hard drive backplane 10 and the third hard drive backplane 30 are provided on the same layer as the mainboard 40; the second hard drive backplane 20 is provided on another layer, for example, an upper layer of the mainboard 40 or the like.

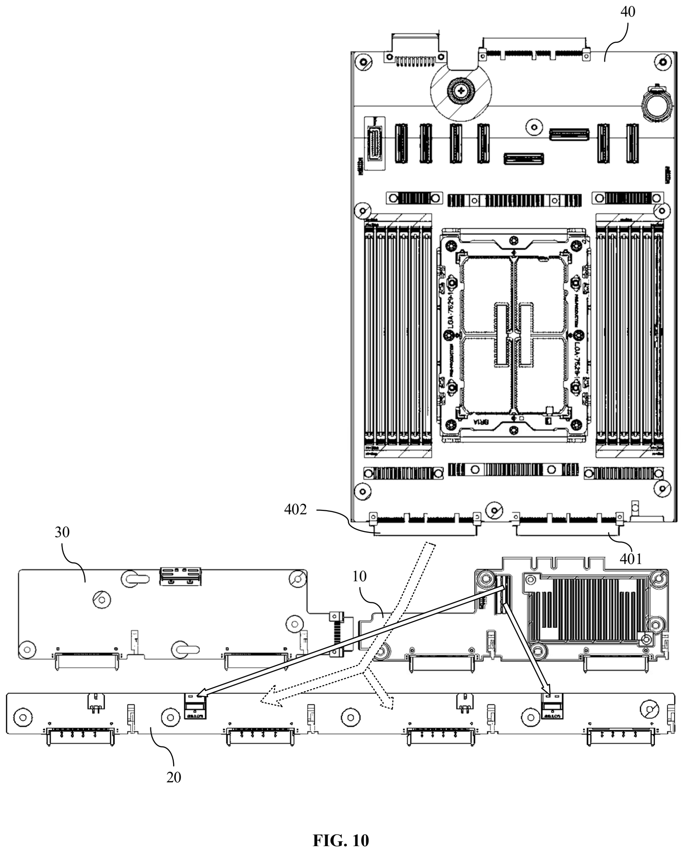

In some embodiments, if the server is provided with only one mainboard 40, that is, the server is a single-socket architecture, three types of hard drive backplanes could be utilized to ensure the storage resources of the server as much as possible. FIG. 10 shows a schematic diagram of an architecture of a server. As shown in FIG. 10, the hard drive backplane module used by the server includes a first hard drive backplane 10, a second hard drive backplane 20, and a third hard drive backplane 30.
the edge side of the mainboard 40 of the server is provided with a first signal connector 401 and a second signal connector 402, both of which may be 4C + connectors. As described above, the first gold finger 101 of the first hard drive backplane 10 is connected to the first signal connector 401 of the mainboard 40, the first connector 103 of the first hard drive backplane 10 is connected to the second connector 202 of the second hard drive backplane 20, and the second gold finger 109 of the first hard drive backplane 10 is connected to the third connector 302 of the third hard drive backplane 30.

For example, if the first connector 103 is an X8 Slim SAS connector, and the second hard drive backplane 20 includes two X4 second connectors 202, that is, an X4 Slim SAS connector, the cable of the first connector 103 could be split in two branches, so that it could communicate with both of the two second connectors 202 of the same second hard drive backplane 20, as shown by the solid arrow in FIG. 10.

Taking the structure shown in FIG. 10 as an example, the RAID controller IC 102 of the first hard drive backplane 10 could generate eight groups of signals suitable for the second-type hard drive; among them, two groups are second data signals, which are connected to the first hard drive interface 104, four groups are third data signals, which are connected to the first connector 103, thereby being supplied to the four second hard drives 502, and the other two groups are fifth data signals, which are connected to the second gold fingers 109, thereby being supplied to the two third hard drives 503.

Further, the first cable connector 201 of the second hard drive backplane 20 is connected to the second signal connector 402 of the mainboard 40 via a cable; the second cable connector 301 of the third hard drive backplane 30 is connected to the third signal connector 403 of the mainboard 40 via a cable. If the second hard drive backplane 20 includes two first cable connectors 201, the two first cable connectors 201 are respectively connected to part of pins of the second signal connector 402 to realize data transmission, as shown by dashed arrows in FIG. 10.

The first hard drive backplane 10 and the third hard drive backplane 30 are disposed on the same layer as the mainboard 40; the second hard drive backplane 20 is provided on the other layer. For example, since the mainboard 40 is generally located at the lowest layer, the first hard drive backplane 10 and the third hard drive backplane 30 may be disposed at the lower layer, and the second hard drive backplane 20 may be disposed above the first hard drive backplane 10.

In some embodiments, for a server with only one socket, such as a 2U server, up to eight 3.5-inch hard drives could be inserted utilizing the first hard drive backplane 10, the second hard drive backplane 20, and the third hard drive backplane 30.

In some embodiments, if the server includes multiple mainboards, such as a dual server architecture including two mainboards, a first hard drive backplane 10 may be provided for each mainboard, and a plurality of second hard drive backplanes 20 may be combined so that the storage capacity of the server meets the requirements. However, since the plurality of first hard drive backplanes 10 may occupy the space of the third hard drive backplane 30, the third hard drive backplane 30 may not be used at this time.

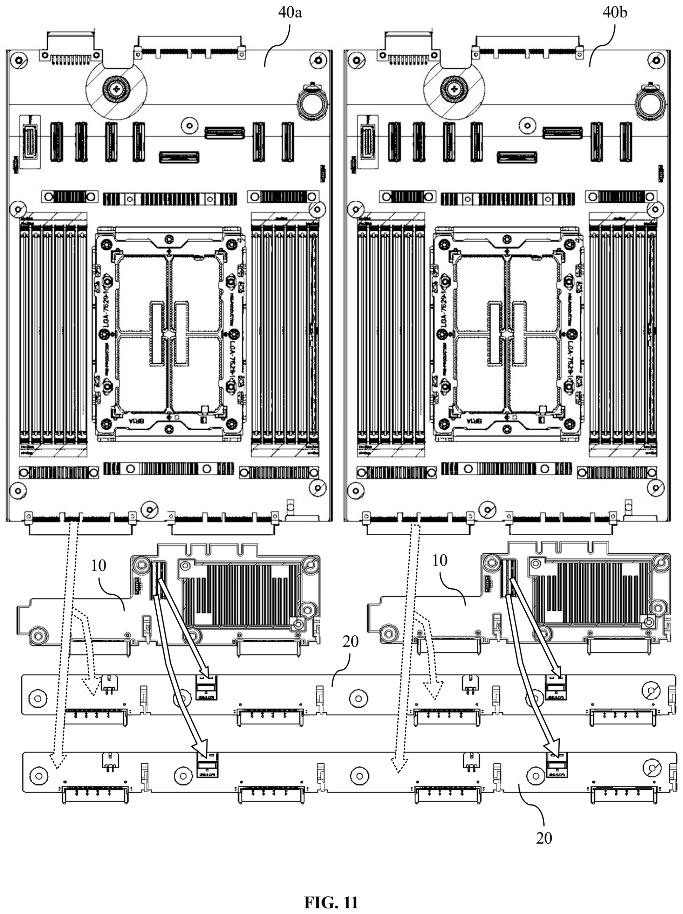

FIG. 11 shows another architectural schematic of the server. As shown in FIG. 11, the server includes two mainboards, namely, a first mainboard 40a and a second mainboard 40b; the hard drive backplane module may include two first hard drive backplanes 10 and two second hard drive backplanes 20, and the second hard drive backplane 20 includes two first cable connectors 201, two second connectors 202, and two second hard drive interfaces 203.
a first gold finger 101 of one of the first hard drive backplanes 10 is connected to a first signal connector 401 of the first mainboard 40a, and the first connector 103 is connected to a second connector 202 that is closer to one of the first hard drive backplanes 10 among all the second connectors 202 on the two second hard drive backplanes 20.

A first gold finger 101 of the other one of the first hard drive backplanes 10 is connected to a first signal connector 401 of the second mainboard 40b, and the first connector 103 is connected to a second connector 202 that is closer to the other one of the first hard drive backplanes 10 among all the second connectors 202 on the two second hard drive backplanes 20.

For example, the first connector 103 is an X8 Slim SAS connector, and each second hard drive backplane 20 includes two X4 second connectors 202 disposed on left and right sides, that is, X4 Slim SAS connectors are provided on both left and right sides. As shown in FIG. 11, the cable of the first connector 103 of the first hard drive backplane 10 on the left side is split in two parts, and part of the cables are connected to the second connector 202 on the left side of one second hard drive backplane 20, and another part is connected to the second connector 202 on the left side of the other one second hard drive backplane 20. Similarly, for the first hard drive backplane 10 on the right side, the cables of the first connector 103 thereof is also split in two parts, and part of the cables are connected to the second connector 202 on the right side of one second hard drive backplane 20, and another part of the cables are connected to the second connector 202 on the right side of another one second hard drive backplane 20. Refer to the solid arrows in FIG. 11.

Taking the structure shown in FIG. 11 as an example, each of the RAID controller ICs 102 of the two first hard drive backplanes 10 could generate six groups of signals suitable for the second-type hard drive; among them, two groups are second data signals, which are connected to the first hard drive interface 104, and the other four groups are third data signals, which are connected to the first connector 103, thereby being provided to the four second hard drives 502. The RAID controller ICs 102 of the two first hard drive backplanes 10 could generate a total of 12 groups of data signals, which are respectively provided to the 12 inserted hard drives.

Further, a second signal connector 402 of the first mainboard 40a is connected to one first cable connector 201 of each of the two second hard drive backplanes 20; a second signal connector 402 of the second mainboard 40b is connected to the other one first cable connector 201 of each of the two second hard drive backplanes 20.

For example, for the first mainboard 40a, the second signal connector 402 thereof is an X16 connector, such as a 4C + connector, and the cables between the second signal connector 402 and the second hard drive backplane 20 is also split in two parts, one part of the cables are connected to a first cable connector 201 that is closer to this first mainboard 40a among all the first cable connectors 201 on one of the second hard drive backplanes 20, for example, the left first cable connector 201 in FIG. 11; and the other part is connected to a first cable connector 201 that is closer to this first mainboard 40a among all the first cable connectors 201 on the other one second hard drive backplane 20, for example, the left first cable connector 201. Similarly, for the second mainboard 40b, the cables between the second signal connector 402 and the second hard drive backplanes 20 are also split into two parts: one part of the cables are connected to a right first cable connector 201 on one of the second hard drive backplanes 20, and another part of the cables are connected to a right first cable connector 201 on the other one second hard drive backplane 20. This could be seen from the dashed arrows in FIG. 11.

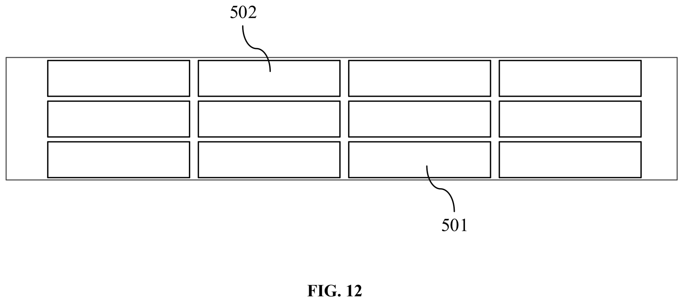

As could be seen from FIG. 11, based on the two first hard drive backplanes 10 and the two second hard drive backplanes 20 shown in FIG. 11, so that the server could accommodate a total of twelve horizontally disposed hard drives, including four first hard drives 501 located at the bottommost layer and eight second hard drives 502 located at the middle layer and the upper layer, and a schematic distribution diagram of these 12 hard drives is shown in FIG. 12.

In some embodiments, for a server with a plurality of mainboards, a first hard drive backplane 10 may be provided for each mainboard, and in combination with a plurality of second hard drive backplanes 20, sufficient storage capacity may be provided for each mainboard to meet storage requirements. Furthermore, by splitting the cable in two parts and connecting the appropriate connector, so that the hard drives on the left and right sides could each provide storage services for different mainboards, and the hard drives in a second hard drive backplane 20 could serve different mainboards.

The hard drive backplane module provided in the embodiments of the present application could be applied to a 2U server, could support a 3.5-inch hard drive, and could be compatible with a 2.5-inch hard drive. The space of the server is divided into three layers, and the corresponding hard drive backplane is arranged horizontally in each layer; Moreover, it could support single-socket system and dual-socket system. As shown in Figure 10, the front-accessible configuration of 8 SAS/SATA/NVMe hard drives could be realized in the single-socket system. As shown in FIG. 11, the front-accessible configuration of 12 SAS/SATA/NVMe hard drives could be realized in the dual-socket system. This allows for full utilization of the mainboard resources. Compared with traditional servers, the mainboard specifications of this server are compatible with single-socket platforms from different vendors and have standardized external interfaces; the overall system adopts board-to-board direct mating solution, with core module interfaces standardized, enabling deep decoupling of modules and independent evolution. By simply replacing modules, switching between different platforms, single-socket systems, and dual-socket systems could be achieved, with a wide range of applications.

Furthermore, when the hard drives are horizontally disposed in a 2U server, gaps are left between the hard drives, which could serve as air exhaust vents. This enables maximum hard drive utilization while ensuring thermal performance.

Although the embodiments of the present application have been described in conjunction with the accompanying drawings, those skilled in the art may make various modifications and variations without departing from the spirit and scope of the present application. Such modifications and variations all fall within the scope defined by the appended claims.

## Claims

1. A hard drive backplane module, **characterized in that** the hard drive backplane module comprises a first hard drive backplane (10); wherein the first hard drive backplane (10) comprises a first gold finger (101), a redundant array of independent disks (RAID) controller IC (102), a first connector (103) and at least one first hard drive interface (104); wherein,
the first gold finger (101) is configured to connect a first signal connector (401) of a mainboard (40);
part of pins of the first gold finger (101) are connected to the first hard drive interface (104) and configured to transmit a first data signal to the first hard drive interface (104); the first data signal is a data signal recognized by a first-type hard drive;
the RAID controller IC (102) is connected to another part of the pins of the first gold finger (101), and the RAID controller IC (102) is configured to perform a conversion between a data signal of the first gold finger (101) and at least one group of second data signals, and perform a conversion between a data signal of the first gold finger (101) and at least one group of third data signals; the second data signal and the third data signal are both data signals recognized by a second-type hard drive;
a first data port of the RAID controller IC (102) is connected to the first hard drive interface (104), and is configured to transmit the second data signals to the first hard drive interface (104);
a second data port of the RAID controller IC (102) is connected to the first connector (103) and configured to transmit the third data signal to the first connector (103); the first connector (103) is configured to transmit the third data signals to other hard drive backplanes.

2. The hard drive backplane module according to claim 1, **characterized in that** the first hard drive backplane (10) further comprises: a first logic controller (105);
the first logic controller (105) is connected to the RAID controller IC (102) through a serial bus, and is configured to transmit serial signals; the serial signals comprise a control signal and a monitoring signal for controlling the RAID controller IC (102).

3. The hard drive backplane module according to claim 2, **characterized in that** the first hard drive backplane (10) further comprises: a supercapacitor interface (106) and a first memory (107); the first memory (107) is connected to the RAID controller IC (102);
the supercapacitor interface (106) is configured to be connected to a supercapacitor;
the first logic controller (105) is further configured to control the supercapacitor interface (106) to supply power to the RAID controller IC (102) in a case of abnormal power supply; the RAID controller IC (102) stores data into the first memory (107).

4. The hard drive backplane module according to claim 1, **characterized in that** the first hard drive backplane (10) further comprises: a second logic controller (108);
the second logic controller (108) is connected to the first hard drive interface (104) and the first connector (103) and configured to acquire hard drive status information of a first hard drive corresponding to the first hard drive interface (104), and turn on an led of the first hard drive.

5. The hard drive backplane module according to claim 1, **characterized in that** the hard drive backplane module further comprises a second hard drive backplane (20); wherein, the second hard drive backplane (20) comprises: a first cable connector (201), a second connector (202) and at least one second hard drive interface (203);
the first cable connector (201) is configured to connect a second signal connector (402) of the mainboard (40) via a cable;
the second connector (202) is configured to connect to the first connector (103) of the first hard drive backplane (10) and transmit the third data signal;
the second connector (202) is connected to the second hard drive interface (203) and configured to transmit the third data signal to the second hard drive interface (203);
the first cable connector (201) is connected to the second hard drive interface (203) and configured to transmit a fourth data signal to the second hard drive interface (203); the fourth data signal is a data signal recognized by the first-type hard drive.

6. The hard drive backplane module according to claim 5, **characterized in that** there are multiple second hard drive interfaces (203), and the second connector (202) is connected to a plurality of second hard drive interfaces (203);
the second hard drive backplane (20) further comprises a first switch chip (204);
an upstream interface of the first switch chip (204) is connected to a serial signal pin of the second connector (202), and a plurality of downstream interfaces of the first switch chip (204) are respectively connected to the plurality of the second hard drive interfaces (203);
the first switch chip (204) is configured to transmit a signal of turning on the led of the hard drive to the plurality of the second hard drive interfaces (203), and/or, to transmit acquired hard drive status information to the second connector (202).

7. The hard drive backplane module according to claim 5 or 6, **characterized in that** the second hard drive backplane (20) comprises: two first cable connectors (201), two second connectors (202) and two second hard drive interfaces (203); the two second hard drive interfaces (203) are divided, according to their respective distances to the second connectors (202), into interface groups, the number of the interface groups matches the number of the second connectors (202);
one of the first cable connectors (201) is connected to a closest second hard drive interface (203) among all the second hard drive interfaces (203) in the first interface group, and the other one of the first cable connectors (201) is connected to a closest second hard drive interface (203) among all the second hard drive interfaces (203) in the second interface group;
one of the second connectors (202) is connected to a closest second hard drive interface (203) among all the second hard drive interfaces (203) in the first interface group, the other one of the second connectors (202) is connected to a closest second hard drive interface (203) among all the second hard drive interfaces (203) in the second interface group.

8. The hard drive backplane module according to claim 5, **characterized in that**,
the first cable connector (201) is further configured to supply power to the second hard drive backplane (20); or,
the first hard drive backplane (10) further comprises a first power connector, and the second hard drive backplane (20) further comprises a second power connector (205); the first power connector is connected to a power pin of the first gold finger (101) and configured to connect the second power connector (205); the second power connector (205) is configured to supply power to the second hard drive backplane (20).

9. The hard drive backplane module according to claim 1 or 5, **characterized in that** the first hard drive backplane (10) further comprises: a second gold finger (109);
the RAID controller IC (102) is further configured to perform conversion between the data signal of the first gold finger (101) and at least one set of fifth data signals; the fifth data signals are data signals recognized by the second-type hard drive;
a third data port of the RAID controller IC (102) is connected to the second gold finger (109) and configured to transmit the fifth data signal to the second gold finger (109);
the second gold finger (109) is configured to connect other hard drive backplanes and transmit the fifth data signal.

10. The hard drive backplane module according to claim 9, **characterized in that** the hard drive backplane module further comprises a third hard drive backplane (30); wherein the third hard drive backplane (30) comprises: a second cable connector (301), a third connector (302) and at least one third hard drive interface (303);
the second cable connector (301) is configured to connect a third signal connector (403) of the mainboard (40) via a cable;
the third connector (302) is configured to connect the second gold finger (109) of the first hard drive backplane (10) and transmit the fifth data signal;
the third connector (302) is connected to the third hard drive interface (303) and configured to transmit the fifth data signal to the third hard drive interface (303);
the second cable connector (301) is connected to the third hard drive interface (303) and configured to transmit a sixth data signal to the third hard drive interface (303); the sixth data signal is a data signal recognized by the first-type hard drive.

11. The hard drive backplane module according to claim 10, **characterized in that** there are multiple third hard drive interfaces (303), and the third connector (302) is connected to a plurality of the third hard drive interfaces (303);
the third hard drive backplane (30) further comprises a second switch chip (304);
an upstream interface of the second switch chip (304) is connected to a serial signal pin of the third connector (302), and a plurality of downstream interfaces of the second switch chip (304) are respectively connected to the plurality of the third hard drive interfaces (303);
the second switch chip (304) is configured to transmit the hard drive led signal to the plurality of the third hard drive interfaces (303), and/or, to transmit acquired hard drive status information to the third connector (302).

12. The hard drive backplane module according to claim 10, **characterized in that** a power pin of the second gold finger (109) is connected to a power pin of the first gold finger (101) and configured to connect a power pin of the third connector (302); the power pin of the third connector (302) is configured to supply power to the third hard drive backplane (30).

13. The hard drive backplane module according to claim 10, **characterized in that**,
the first hard drive interface (104) is disposed on a long side of the first hard drive backplane (10), and the second gold finger (109) is disposed on a short side of the first hard drive backplane (10);
the third hard drive interface (303) is disposed on a long side of the third hard drive backplane (30), the third connector (302) is disposed on a short side of the third hard drive backplane (30);
the total number of the first hard drive interface (104) in the first hard drive backplane (10) and the third hard drive interface (303) in the third hard drive backplane (30) does not exceed a maximum number of hard drives that the server is capable to set in a width direction.

14. The hard drive backplane module according to claim 1, **characterized in that**,
the first connector (103) is connected to other hard drive backplanes and configured to transmit the third data signal to other hard drive backplanes.

15. The hard drive backplane module according to claim 5, **characterized in that**,
the first hard drive interface (104) is configured to be inserted to a first hard drive (501), the second hard drive backplane (20) connected to the first connector (103) is configured to be inserted into a second hard drive (502).

16. The hard drive backplane module according to claim 2, **characterized in that**,
a heat sink (111) is disposed at the middle of the first hard drive backplane (10), the RAID controller IC (102) and the first logic controller (105) are disposed under the heat sink (111).

17. The hard drive backplane module according to claim 1, **characterized in that** the hard drive backplane module further comprises:
a temperature sensor configured to detect a temperature of the first hard drive backplane (10); wherein a temperature signal acquired by the temperature sensor is fed to the first gold finger (101) via a serial bus.

18. The hard drive backplane module according to claim 1, **characterized in that** a second hard drive backplane (20) further comprises: a temperature sensor and a second memory;
wherein the temperature sensor and the second memory are connected to a serial signal pin of a second connector (202).

19. A server, **characterized in that** the server comprises a mainboard (40) and the hard drive backplane module according to any one of claims 1-18;
wherein, the hard drive backplane in the hard drive backplane module is horizontally disposed.

20. The server according to claim 14, **characterized in that** the hard drive backplane module comprises the first hard drive backplane (10), a second hard drive backplane (20) and a third hard drive backplane (30);
the first gold finger (101) of the first hard drive backplane (10) is connected to the first signal connector (401) of the mainboard (40), the first connector (103) of the first hard drive backplane (10) is connected to a second connector (202) of the second hard drive backplane (20), and a second gold finger (109) of the first hard drive backplane (10) is connected to a third connector (302) of a third hard drive backplane (30);
a first cable connector (201) of the second hard drive backplane (20) is connected to a second signal connector (402) of the mainboard (40) via a cable; a second cable connector (301) of the third hard drive backplane (30) is connected to a third signal connector (403) of the mainboard (40) via a cable;
the first hard drive backplane (10) and the third hard drive backplane (30) are disposed on a same layer as the mainboard (40); the second hard drive backplane (20) is disposed on another layer.

21. The server according to claim 14, **characterized in that** the server comprises a first mainboard (40a) and a second mainboard (40b); the hard drive backplane module comprises: two first hard drive backplanes (10) and two second hard drive backplanes (20), the second hard drive backplane (20) comprises two first cable connectors (201), two second connectors (202) and two second hard drive interfaces (203);
wherein a first gold finger (101) of one of the first hard drive backplanes (10) is connected to a first signal connector (401) of the first mainboard (40a), and the first connector (103) is connected to a second connector (202) that is closer to one of the first hard drive backplanes (10) among all the second connectors (202) on the two second hard drive backplanes (20);
a first gold finger (101) of the other one of the first hard drive backplanes (10) is connected to a first signal connector (401) of the second mainboard (40b), and the first connector (103) is connected to a second connector (202) that is closer to the other one of the first hard drive backplanes (10) among all the second connectors (202) on the two second hard drive backplanes (20);
a second signal connector (402) of the first mainboard (40a) is connected to one first cable connector (201) of each of the two second hard drive backplanes (20);
a second signal connector (402) of the second mainboard (40b) is connected to the other one first cable connector (201) of each of the two second hard drive backplanes (20).
